(19) Europäisches Patentamt / European Patent Office / Office européen des brevets

(11) **EP 2 541 802 B1**

(12) **EUROPEAN PATENT SPECIFICATION**

(45) Date of publication and mention
of the grant of the patent:
**13.04.2016 Bulletin 2016/15**

(51) Int Cl.:
*H04W 72/04* (2009.01)   *H04L 5/00* (2006.01)
*H04L 27/00* (2006.01)

(21) Application number: **11746853.8**

(22) Date of filing: **25.02.2011**

(86) International application number:
**PCT/CN2011/071288**

(87) International publication number:
**WO 2011/103811 (01.09.2011 Gazette 2011/35)**

(54) **METHOD FOR DATA TRANSMISSION, BASE STATION AND COMMUNICATIONS SYSTEM**

DATENÜBERTRAGUNGSVERFAHREN, BASISSTATION UND KOMMUNIKATIONSSYSTEM

PROCÉDÉ POUR LA TRANSMISSION DE DONNÉES, STATION DE BASE ET SYSTÈME DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.02.2010 CN 201010117174**

(43) Date of publication of application:
**02.01.2013 Bulletin 2013/01**

(73) Proprietor: **Huawei Technologies Co., Ltd.
Longgang District
Shenzhen, Guangdong 518129 (CN)**

(72) Inventors:
• **YU, Zheng
Shenzhen
Guangdong 518129 (CN)**
• **XUE, Lixia
Shenzhen
Guangdong 518129 (CN)**
• **FAN, Xiaoan
Shenzhen
Guangdong 518129 (CN)**
• **LI, Chaojun
Shenzhen
Guangdong 518129 (CN)**

(74) Representative: **Epping - Hermann - Fischer
Patentanwaltsgesellschaft mbH
Schloßschmidstraße 5
80639 München (DE)**

(56) References cited:
**WO-A1-2009/105750     WO-A2-2008/038114
CN-A- 101 309 134     CN-A- 101 335 550
US-A1- 2009 268 685**

• **"3rd Generation Partnership Project; Technical
Specification Group Radio Access Network;
Evolved Universal Terrestrial Radio Access
(E-UTRA); Physical Channels and Modulation
(Release 9)", 3GPP STANDARD; 3GPP TS 36.211,
3RD GENERATION PARTNERSHIP PROJECT
(3GPP), MOBILE COMPETENCE CENTRE ; 650,
ROUTE DES LUCIOLES ; F-06921
SOPHIA-ANTIPOLIS CEDEX ; FRANCE, no.
V9.0.0, 10 December 2009 (2009-12-10), pages
1-85, XP050400685, [retrieved on 2009-12-10]**
• **"3 rd Generation Partnership Project; Technical
Specification Group Radio Access Network;
Evolved Universal Terrestrial Radio Access
(E-UTRA); Physical layer procedures (Release
9)", 3GPP STANDARD; 3GPP TS 36.213, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, no. V9.0.1, 17 December 2009
(2009-12-17), pages 1-81, XP050401048,
[retrieved on 2009-12-17]**

**(Cont. next page)**

- "3rd Generation Partnership Project; Technical Specification Group Radio Access Network; Evolved Universal Terrestrial Radio Access (E-UTRA) Radio Resource Control (RRC); Protocol specification (Release 9)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.1.0, 7 January 2010 (2010-01-07), pages 1-221, XP050401822, [retrieved on 2010-01-07]
- PANASONIC: "OCC and CS for UL RS in SU/MU-MIMO", 3GPP DRAFT; R1-100378, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050418041, [retrieved on 2010-01-12]
- NTT DOCOMO: "Uplink DM-RS Resource Assignment for LTE-Advanced", 3GPP DRAFT; R1-101223 UL DMRS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418739, [retrieved on 2010-02-16]
- PANTECH: "Considerations on Uplink DM-RS sequence in LTE-Advanced", 3GPP DRAFT; R1-100668, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 13 January 2010 (2010-01-13), XP050418338, [retrieved on 2010-01-13]
- QUALCOMM INCORPORATED: "DM-RS in Support of UL Spatial Multiplexing", 3GPP DRAFT; R1-100691 DMRS FOR UL MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050418281, [retrieved on 2010-01-12]
- LG ELECTRONICS: "Consideration on DM-RS design for UL MIMO in LTE-A", 3GPP DRAFT; R1-101246 LG UL DM-RS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 17 February 2010 (2010-02-17), XP050418987, [retrieved on 2010-02-17]
- HUAWEI: "Considerations on PHICH mapping in LTE-A", 3GPP DRAFT; R1-101046 CONSIDERATIONS ON PHICH MAPPING IN LTE-A, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418617, [retrieved on 2010-02-16]
- PANASONIC: "CM reduction for UL RS on multiple component carriers", 3GPP DRAFT; R1-101268, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418778, [retrieved on 2010-02-16]
- HUAWEI: "CM issues for UL carrier aggregation", 3GPP DRAFT; R1-093839 CM ISSUES FOR UL CARRIER AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388346, [retrieved on 2009-10-06]
- NEC GROUP: "PHICH carrier linkage for carrier aggregation", 3GPP DRAFT; R1-093861-PHICH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388366, [retrieved on 2009-10-05]
- YINHUI LIU: "Research on the density of demodulation reference signals for dual-layer beamforming in LTE system", COMMUNICATIONS TECHNOLOGY AND APPLICATIONS, 2009. ICCTA '09. IEEE INTERNATIONAL CONFERENCE ON, IEEE, PISCATAWAY, NJ, USA, 16 October 2009 (2009-10-16), pages 322-325, XP031577540, ISBN: 978-1-4244-4816-6

## Description

## FIELD OF THE INVENTION

The present invention relates to communications technologies, and in particular, to a data transmission technology.

## BACKGROUND OF THE INVENTION

A base station in a communication system may perform channel estimation for a physical uplink data channel by using a DMRS (demodulation reference signal, demodulation reference signal) sequence sent by a UE (User Equipment, user equipment). The base station performs demodulation on data information carried on the physical uplink data channel by using a channel coefficient that is estimated by using the DMRS. The demodulation reference signal transmitted by the user equipment is a sequence known to both the base station and the user equipment. In addition, a UE served by the base station needs to transmit a demodulation reference signal when uplink data is transmitted. Demodulation reference signals transmitted by different UEs are orthogonal. Orthogonality of the demodulation reference signals transmitted by different UEs may be implemented by manners of frequency division multiplexing, time division multiplexing, code division multiplexing, or different cyclic shifts.

A manner of semi-persistent scheduling may be adopted for uplink data scheduling or downlink data scheduling in the communication system.

In the prior art, when uplink data transmission is performed by adopting the semi-persistent scheduling manner, different user equipments cannot perform data transmission on a same time and frequency resource, which reduces spectrum utilization efficiency.

US 2009/268685 A1 discloses assignment of ACK resource in a wireless communication system. Techniques for assigning acknowledgement (ACK) resource to a user equipment (UE) in a wireless communication system are described. In one design, a first parameter indicative of radio resources (e.g., the lowest index of at least one physical resource block) allocated to the UE for data transmission may be obtained. A second parameter indicative of another resource (e.g., a cyclic shift of a reference signal sequence) assigned to the UE for data transmission may also be obtained. The first and/or second parameter may be restricted, and each restricted parameter may be limited to a set of allowed values among all available values for the parameter. ACK resource assigned to the UE for data transmission may be determined based on the first and second parameters. In one design, sequential first parameter values may be mapped to sequential ACK resources indices. In another design, mirror mapping with different mapping directions may be used for different allowed values of the second parameter.

An article titled "3rd Generation Partnership Project; Technical Specification Group Radio Access Network; Evolved Universal Terrestrial Radio Access (E-UTRA); Physical Channels and Modulation (Release 9)" published at 3GPP STANDARD; 3GPP TS 36.211, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. V9.0.0, 10 December 2009 (2009-12-10) discloses demodulation reference signal for PUSCH. The cyclic shift $\alpha$ in a slot $n_s$ is given as $\alpha = 27\pi n_{CS}/12$ with $n_{CS} = (n^{(1)}_{DMRS} + n^{(2)}_{DMRS} + n_{PRS}(n_s))\mathrm{mod}\ 12$, where the values of $n^{(1)}_{DMRS}$ is given according to the parameter cyclic-Shift provided by higher layers, $n^{(2)}_{DMRS}$ is given by the cyclic shift for DMRS field in most recent DC1 format 0 [3] for the transport block associated with the corresponding PUSCH transmission. The quantity $n^{(2)}_{DMRS}$ shall be set to zero, if there is no PDCCH with DCI formal 0 for the same transport block, and if the initial PUSCH for the same transport block is semi-persistently scheduled, or if the initial PUSCH for the same transport block is scheduled by the random access response grant.

An article titled "3 rd Generation Partnership Project; Technical Specification Group Radio Access Network; Evolved Universal Terrestrial Radio Access (E-UTRA); Physical layer procedures (Release 9)" published at 3GPP STANDARD; 3GPP TS 36.213, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. V9.0.1, 17 December 2009 (2009-12-17) discloses PHICH assignment procedure and PDCCH validation for semi-persistent scheduling. $n_{DMRS}$ is mapped from the cyclic shift for DMRS field in the most recent DCI format 0 [4] for the transport block associated with the corresponding PUSCH transmission. $n_{DMRS}$ shall be set to zero, if there is no PDCCH with DCI format 0 for the same transport block, and if the initial PUSCH for the same transport block is semi-persistently scheduled, or if the initial PUSCH for the same transport block is scheduled by the random access response grant.

An article titled "3rd Generation Partnership Project; Technical Specification Group Radio Access Network; Evolved Universal Terrestrial Radio Access (E-UTRA) Radio Resource Control (RRC); Protocol specification (Release 9)" published at 3GPP STANDARD; 3GPP TS 36.331, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. V9.1.0, 7 January 2010 (2010-01-07) discloses actions upon reception of *SystemInformationBlockType2* and reception of an *RRCConnectionReconfiguration* including the *mobilityUontrolInfo* by the UE (handover). If the *RRCConnectionReconfiguration* message includes the *mobilityControlInfo* and the UE is able to comply with the configuration included in this message, the UE shall: stop timer T310, if running; start timer T304 with the timer value set to t304, as included in the *mobilityControlInfo;* if the *carrierFreq* is included: consider the target cell to be one on the frequency indicated by the *carrierFreq* with a physical cell identity indicated by the *targelPhysCellId;* else: consider the target cell to be one on the current frequency with a physical cell identity indicated by the *targetPhysCellkl;* start synchronising to the DL of the target cell.

An article titled "OCC and CS for UL RS in SU/MU-MIMO" by PANASONIC published at 3GPP DRAFT; R1-100378, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Valencia, Spain; 20100118, 12 January 2010 (2010-01-12) discloses signaling of CS and OCC for SU/MU-MIMO. Introduction of at least one new transmission mode would be necessary for supporting SU-MIMO. It is preferable to define a single transmission mode to support both SU- and MU-MIMO for a simple system design. Below, we discuss the signaling schemes of CS and OCC which is commonly used for SU/MU-MIMO operation. One CS index (for 1st layer) is indicated explicitly by PDCCH as well as Rel.8. Assuming SU-MIMO up to 4 layers in Rel.10, CS indications for 2nd-4th layers are necessary. In order to avoid unnecessary signaling it would be preferable to implicitly derive the CS indices from the CS index of 1st layer. The combination of the CS indices and OCC indices provides better performance in terms of the channel estimation in Su-MIMO because different OCC index is assigned for the smalle CS interval between layers.

An article titled "Uplink DM-RS Resource Assignment for LTE-Advanced" by NTT DOCOMO published at 3GPP DRAFT; R1-101223 UL DMRS, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. San Francisco, USA; 20100222, 16 February 2010 (2010-02-16) discloses uplink DM-RS resource assignment for LTE-Advanced. At the previous RAN1#59 meeting in Jeju, we presented our basic views concerning uplink demodulation reference signal (DM-RS) enhancement in terms of introducing an orthogonal cover code (OCC) and/or IFDMA in addition to the existing cyclic shift (CS) for SU-MIMO, MU-MIMO, and CoMP reception in LTE-Advanced. Based on the discussions during the RANI meeting and in the email reflector, this contribution presents our views in more detail regarding a resource assignment method for the uplink DM-RS in LTE-Advanced.

An article titled "Considerations on Uplink DM-RS sequence in LTE-Advanced" by PANTECH published at 3GPP DRAFT; R1-100668, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Valencia, Spain; 20100118, 13 January 2010 (2010-01-13) discloses considerations on uplink DM-RS sequence in LTE-Advanced. The current agreements for uplink DM-RS multiplexing on SU-MIMO in LTE-Advanced are that Cyclic shift (CS) separation is the primary multiplexing scheme; FFS: Orthogonal cover code (OCC) separation between slots as complementary multiplexing scheme. Codes are {+1, +1} and {+1, -1}. In this contribution, we discussed considerations on CS/OCC configuration for uplink DM-RS design. Considerations on uplink DM-RS sequence design for non-contiguous resource allocation (clustered DFT-S-OFDM) and aggregation of CC (component carrier)s were also discussed.

An article titled "DM-RS in Support of UL Spatial Multiplexing" by QUALCOMM INCORPORATED published at 3GPP DRAFT; R1-100691 DMRS FOR UL MIMO, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Valencia, Spain; 20100118, 12 January 2010 (2010-01-12) discloses DM-RS in support of UL spatial multiplexing. In LTE Rel-8, DCI (downlink control information) format 0 for PUSCH scheduling has a 3-bit filed for signaling of the cyclic shift for DM-RS. To support SU-MIMO in the uplink of LTE-A, multiple cyclic shifts and/or orthogonal cover codes are needed to be signaled to the UE for DM-RS multiplexing. It is not practical to signal multiple cyclic shift indices explicitly for all layers considering the large overhead inclined. So our view for CS signaling is: only one cyclic shift index is signaled in the corresponding DCI as in Rel-8; the mapped cyclic shift value: $n_{\text{DMRS}}^{(2)}$ from the signaled cyclic shift index is used for DM-RS of layer-0; the cyclic shift values for other layers are derived from $n_{\text{DMRS}}^{(2)}$ according to a pre-defined rule.

An article titled "Consideration on DM-RS design for UL MIMO in LTE-A" by LG ELECTRONICS published at 3GPP DRAFT; R1-101246 LG UL DM-RS, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. San Francisco, USA; 20100222, 17 February 2010 (2010-02-17) discloses consideration on DM-RS design for UL MIMO in LTE-A. To support UL MIMO transmission in LTE-A, the orthogonality using CSs among layers could be a considerable criterion so that channel estimation performances for multiple layers can be ensured. In CDM approach using -CSs, it is desirable that the different CSs between layers have far distances as much as possible to minimize inter-layer interference in channel estimation for each layer resulting from delay spread of channel. As detailed options to indicate multiple CSs to a UE, three options can be summarized: Option 1: Multiple CS fields for multiple layers; Option 2: One CS field for a reference layer (e.g. layer 0) and one gap field of increment indication for other layers; Option 3: Only one CS field for indication reference layer (e.g. layer 0) and predefined CS allocation for other layers.

An article titled "Considerations on PHICH mapping in LTE-A" by HUAWEI published at 3GPP DRAFT; R1-101046 CONSIDERATIONS ON PHICH MAPPING IN LTE-A, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. San Francisco, USA; 20100222, 16 February 2010 (2010-02-16) discloses considerations on PHICH mapping in LTE-A. For a single PHICH resource, an LTE-A UE will see the same PHICH resource as seen by an LTE UE. For LTE FDD, the size of this single PHICH resource in a subframe will depend on the DL bandwidth configuration, the Ng value (Ng = {1/6, 1/2, 1, 2}) and the cyclic prefix length. For separate PHICH resources, the PHICH resources will be composed of the PHICH resource seen by LTE UEs and the extra PHICH resources exclusively seen by LTE-A UEs, and the extta PHICH resources can be reserved on CCE resource [2] or data resource (similar to the R-PHICH method in Relay). In essence, the number of available PHICH channels on one DL CC and the number of required PHICH channels associated with this DL CC will determine the configuration of a single PHICH resource or separate PHICH resources.

An article titled "CM reduction for UL RS on multiple component carriers" by PANASONIC published at 3GPP DRAFT; R1-101268, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. San Francisco, USA; 20100222, 16 February 2010 (2010-02-16) discloses CM reduction for UL RS on multiple component carriers. In Rel. 8, the RS sequence depends on the number of RBs allocated to the UE. For carrier aggregation, on each CC the RS sequence depending on the number of allocated RRs for the CC is transmitted. In case the numbers of allocated RB are the same among CCs, the same sequences are used in the CCs and CM value becomes high. So, we discuss the two schemes for the CM reduction based on Rel.8 design of UL RS. Scheme 1: Different Sequence Group (SG) assignment for each CC. Scheme 2: Different Cyclic Shift (CS) sequence assignment for each CC.

An article titled "CM issues for UL carrier aggregation" by HUAWEI published at 3GPP DRAFT; R1-093839 CM ISSUES FOR UL CARRIER AGGREGATION, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. Miyazaki; 20091012, 12 October 2009 (2009-10-12) discloses CM issues for UL carrier aggregation. Based on LTE Rel-8 DM RS, Computer-generated sequence (CGS) is used for the sequence length less than 3RBs and Zadoff-Chu sequence (ZCS) are used for the others. For the same RS aggregation, i.e. using the same base sequence, Cyclic shift (CS) and sequence length in each CC, the CM values will be very high. To achieve the distinct CS for each CC, the cell ID, $\Delta_{SS}$, $n^{(1)}_{DMRS}$ or $n^{(2)}_{DMRS}$ [3] could be set differently between CCs. However, $n^{(1)}_{DMRS}$ and $\Delta_{SS}$ is used for inter-cell shift coordination, and $n^{(2)}_{DMRS}$ is used for MU-MIMO and calculating the PHICH resource, so adjusting $\Delta_{SS}$, $n^{(1)}_{DMRS}$ and $n^{(2)}_{DMRS}$ may need further study.

An article titled "PHICH carrier linkage for carrier aggregation" by NEC GROUP published at 3GPP DRAFT; R1-09386-1-PHICH, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. Miyazaki; 20091012, 12 October 2009 (2009-10-12) discloses PHICH carrier linkage for carrier aggregation. In this section, we suggest a solution that combines the advantages of Option 1 and Option 2 by introducing a single bit, called PHICH carrier indicator bit, in the UL grant or in the higher layer signaling (RRC signaling) to indicate it the PHICH carrier linkage should be based on the DL CC used for the UL grant (referred to as dynamic linkage hereafter) or the cell-specific UL/DL CC linkage (referred to as cell-specific linkage hereafter). If the single bit is introduced in DCI formats for UL grant it only needs to exist in DCI formats with carrierTnoTcator field (see Figure 6 for example), this ensures that the total number of blind decoding attempts required to be performed by the UE is not affected by the introduction of the PHICH carrier indicator bit.

An article titled "Research on the density of demodulation reference signals for dual-layer beamforming in LTE system" by YINHUI LIU published at COMMUNICATIONS TECHNOLOGY AND APPLICATIONS, 2009. ICCTA '09. IEEE INTERNATIONAL CONFERENCE ON, IEEE, PISCATAWAY, NJ, USA, 16 October 2009 (2009-10-16), pages 322-325, XP031577540, ISBN: 978-1-4244-4816-6 discloses research on the density of demodulation reference signals for dual-layer beamforming in LTE system. This paper studied the density of demodulation reference signals (DRS) for dual-layer beamforming. Both the channel estimation performance and DRS overhead were considered by translating both effects into Signal Interference Noise Ratio (SINR), and then the total effective SINR was calculated. By comparing the total effective SINR of different DRS density, it is proposed that 12 DRS in a resource block gives about balanced performance at dual-layer beamforming.

## SUMMARY OF THE INVENTION

By providing a data transmission method, a base station, and a communication system, when uplink data transmission is performed by adopting a semi-persistent scheduling manner, a problem that different user equipments cannot perform data transmission on a same time and frequency resource, which reduces spectrum utilization efficiency, can be solved.

In one aspect, a data transmission method is provided, where the method includes:

determining to perform semi-persistent scheduling on data of a user equipment;

setting a value of first information for the user equipment, wherein the value of the first information is used for the user equipment to determine a cyclic shift value of a reference signal sequence of the user equipment, the value of the first information is a value of an n-DMRS field for indicating a specific value of $n_{\mathrm{DMRS}}^{(2)}$, and for different UEs that perform the data transmission on the same time and frequency resource, uplink reference signal sequences of the UEs have different cyclic shift values; and

obtaining the reference signal sequence of the user equipment, performing channel estimation according to the reference signal sequence of the user equipment, and performing demodulation on data information of the user equipment according to a channel coefficient obtained through the channel estimation;

wherein the setting, by the base station, the value of the first information for the user equipment comprises one of:

in a single-user multi-codeword transmission mode, setting, by the base station, the value of the first information for the user equipment according to a mapping between a value of a field and the value of the first information by setting a value of the field, wherein the field is an added field on a physical downlink control channel in the single-user multi-codeword transmission mode compared with a physical downlink control channel in a single-user single-codeword transmission mode;

in a scenario of carrier aggregation, setting, by the base station, the value of the first information for the user equipment according to a mapping between a value of a carrier indicator field and the value of the first information by setting the value of the carrier indicator field on a physical downlink control channel; and

in a scenario of carrier aggregation, obtaining, by the base station, a redundancy value of different values which is able to be indicated by a carrier indicator field in the carrier indicator field on a physical downlink control channel compared with values used for indicating different carriers in the carrier indicator field, and setting, by the base station, the value of the first information for the user equipment by setting a mapping between the redundancy value and the value of the first information.

In another aspect, a base station is provided, where the base station includes:

a determining module, configured to determine to perform semi-persistent scheduling on data of a user equipment;

a setting module, configured to set a value of first information for the user equipment, wherein the value of the first information is used for the user equipment to determine a cyclic shift value of a reference signal sequence of the user equipment, the value of the first information is a value of an n-DMRS field for indicating a specific value of $n_{\mathrm{DMRS}}^{(2)}$, and for different UEs that perform the data transmission on the same time and frequency resource, uplink reference signal sequences of the UEs have different cyclic shift values; and

an obtaining and demodulating module, configured to obtain the reference signal sequence of the user equipment, perform channel estimation according to the reference signal sequence of the user equipment, and perform demodulation on data information of the user equipment according to a channel coefficient obtained by performing the channel estimation the setting module (302) comprises a fourth setting unit, configured to set, in a single-user multi-codeword transmission mode, the value of the first information for the user equipment according to a mapping between a value of a field and the value of the first information by setting a value of the field, wherein the field is an added field on a physical downlink control channel in the single-user multi-codeword transmission mode compared with a physical downlink control channel in a single-user single-codeword transmission mode; or

a fifth setting unit, configured to: in a scenario of carrier aggregation, set the value of the first information for the user equipment according to a mapping between a value of a carrier indicator field and the value of the first information by setting the value of the carrier indicator field on a physical downlink control channel; or

in a scenario of carrier aggregation, obtain a redundancy value of different values which is able to be indicated by a carrier indicator field in the carrier indicator field on a physical downlink control channel compared with values used for indicating different carriers in the carrier indicator field, and set the value of the first information for the user equipment by setting a mapping between the redundancy value and the value of the first information.

Further, in another aspect, a communication system is provided, where the system includes: a base station, and a user equipment that is connected to the base station in a communicative manner.

The base station is configured to: determine to perform semi-persistent scheduling on data of a user equipment;

set a value of first information for the user equipment, wherein the value of the first information is used for the user equipment to determine a cyclic shift value of a reference signal sequence of the user equipment, the value of the first information is a value of an n-DMRS field for indicating a specific value of $n_{\text{DMRS}}^{(2)}$, and for different UEs that perform the data transmission on the same time and frequency resource, uplink reference signal sequences of the UEs have different cyclic shift values; and obtain the reference signal sequence of the user equipment, perform channel estimation according to the reference signal sequence of the user equipment, and perform demodulation on data information of the user equipment according to a channel coefficient obtained by performing the channel estimation;

wherein the setting, by the base station, the value of the first information for the user equipment comprises one of: in a single-user multi-codeword transmission mode, setting, by the base station, the value of the first information for the user equipment according to a mapping between a value of a field and the value of the first information by setting a value of the field, wherein the field is an added field on a physical downlink control channel in the single-user multi-codeword transmission mode compared with a physical downlink control channel in a single-user single-codeword transmission mode;

in a scenario of carrier aggregation, setting, by the base station, the value of the first information for the user equipment according to a mapping between a value of a carrier indicator field and the value of the first information by setting the value of the carrier indicator field on a physical downlink control channel; and

in a scenario of carrier aggregation, obtaining, by the base station, a redundancy value of different values which is able to be indicated by a carrier indicator field in the carrier indicator field on a physical downlink control channel compared with values used for indicating different carriers in the carrier indicator field, and setting, by the base station, the value of the first information for the user equipment by setting a mapping between the redundancy value and the value of the first information.

Through the foregoing data transmission method, base station, and communication system, when the uplink data transmission is performed by adopting the semi-persistent scheduling manner, different user equipments can perform the data transmission on the same time and frequency resource, which improves the spectrum utilization efficiency.

BRIEF DESCRIPTION OF THE DRAWINGS

FIG. 1 is a flowchart of a data transmission method according to an embodiment of the present invention;
FIG. 2 is a flowchart of another data transmission method according to an embodiment of the present invention;
FIG. 3 is a schematic structural diagram of a base station according to an embodiment of the present invention; and
FIG. 4 is a schematic structural diagram of a communication system according to an embodiment of the present invention.

DETAILED DESCRIPTION OF THE EMBODIMENTS

An LTE (Long term evolution, long term evolution) system is taken as an example below to explain the embodiments of the present invention in detail.

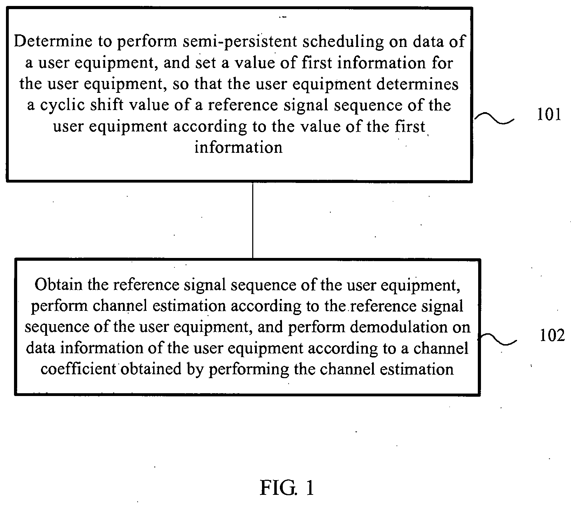

With reference to FIG. 1, a data transmission method according to an embodiment of the present invention is described in detail below. As shown in FIG. 1, the method may be as follows.

Step 101: Determine to perform semi-persistent scheduling on data of a user equipment, and set a value of first information for the user equipment, so that the user equipment determines a cyclic shift value of a reference signal sequence of the user equipment according to the value of the first information.

Step 102: Obtain the reference signal sequence of the user equipment, perform channel estimation according to the reference signal sequence of the user equipment, and perform demodulation on data information of the user equipment according to a channel coefficient obtained by performing the channel estimation.

According to the method provided in the foregoing embodiment, when uplink data transmission is performed by adopting a semi-persistent scheduling manner, different user equipments can perform data transmission on a same time and frequency resource, which improves spectrum utilization efficiency.

In the LTE system, the user equipment sends a Zadoff-Chu sequence to a base station. A cyclic shift value of the Zadoff-Chu sequence of the user equipment is determined by three parameters, which are $n_{\text{DMRS}}^{(1)}$, $n_{\text{DMRS}}^{(2)}$, and $n_{\text{PRS}}(n_s)$. $n_{\text{DMRS}}^{(1)}$ and $n_{\text{PRS}}(n_s)$ are cell-specific parameters, and their specific values are set by upper-layer signaling of the system. $n_{\text{DMRS}}^{(2)}$ is a user equipment-specific (UE-specific) parameter, and its specific value is indicated by an n-DMRS field (a cyclic shift indicator field of a demodulation reference signal) on a PDCCH (Physical downlink control channel, physical downlink control channel) for uplink data scheduling. If different UEs perform uplink data transmission on a same uplink time and frequency resource, uplink reference signal sequences of the UEs need to have different cyclic shift values. That is, values of the $n_{\text{DMRS}}^{(2)}$ of the UEs need to be mutually different.

When data transmission is performed by adopting the semi-persistent scheduling manner, the base station uses the PDCCH for the semi-persistent scheduling to perform resource scheduling for an initial data transmission block of the UE; the UE transmits a data transmission block according to a period configured by the upper-layer signaling of the system, and the UE considers by default that a time and frequency resource occupied by a non-initial data transmission block is the same as a time and frequency resource occupied by the initial data transmission block. In the LTE system, a value of a 3-bit n-DMRS field on the PDCCH for the semi-persistent scheduling is set to 000 fixedly.

In the LTE system, the base station needs to determine, according to an index of a first start physical resource block occupied by an uplink data transmission block of the UE and the n-DMRS bit field, an index of a physical hybrid-ARQ indicator channel (PHICH channel) corresponding to the foregoing data transmission block. The PHICH channel carries response information about whether the data transmission block transmitted by the UE to the base station is correctly received by the base station. If the base station correctly receives the data transmission block sent by the UE, the base station feeds back an ACK through the PHICH channel to the UE; otherwise, if the base station does not correctly receive the data transmission block sent by the UE, the base station feeds back a NACK through the PHICH channel to the UE. After the UE receives NACK information, if transmission of the foregoing data transmission block does not reach the maximum number of times of retransmission, where the maximum number of times of retransmission is allowed in the system, the UE retransmits the foregoing data transmission block.

When the data transmission is performed by using the semi-persistent scheduling manner, if different UEs perform the uplink data transmission on the same uplink time and frequency resource, because the n-DMRS field is set to a fixed state, and the uplink reference signal sequences of these UEs have a same cyclic shift value, different UEs in the semi-persistent scheduling cannot perform the data transmission on the same time and frequency resource, and therefore, the spectrum utilization efficiency is reduced.

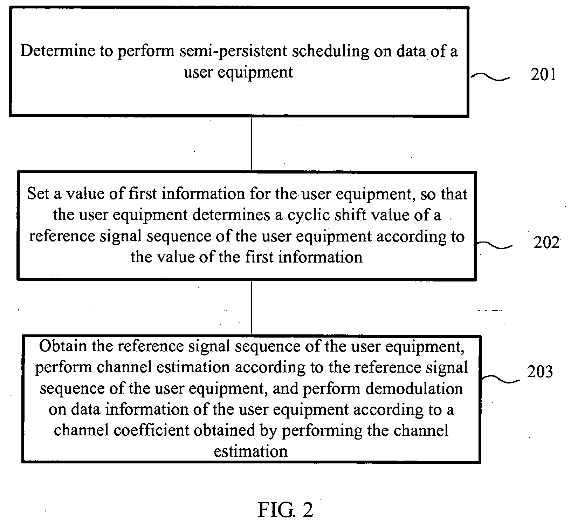

With reference to FIG. 2, a data transmission method according to an embodiment of the present invention is described in detail below. As shown in FIG. 2, the method may be as follows.

Step 201: Determine to perform semi-persistent scheduling on data of a user equipment.

Step 202: Set a value of first information for the user equipment, so that the user equipment determines a cyclic shift value of a reference signal sequence of the user equipment according to the value of the first information.

The first information may be a value of an n-DMRS.

The setting a value of first information for the user equipment may include:

sending radio resource control signaling to the user equipment, where the radio resource control signaling includes second information; and setting the value of the first information for the user equipment according to a mapping set between a value for the second information and the value of the first information. Specifically, in an existing LTE system, when data transmission is performed by adopting an uplink semi-persistent scheduling manner, a new field may be added in RRC (Radio resource control) signaling, for example, an m-DMRS, to indicate or determine a value of an n-DMRS field on a PDCCH for the UE. The m-DMRS may be the foregoing second information. Correspondence between a value of the m-DMRS and the value of the n-DMRS may be as shown in Table 1, Table 2, or Table 3. Table 1 shows correspondence between the value of the m-DMRS and the value of the n-DMRS when a length of an m-DMRS field is 1 bit. Table 2 shows correspondence between the value of the m-DMRS and the value of the n-DMRS when the length of the m-DMRS field is 2 bits. Table 3 shows correspondence between the value of the m-DMRS and the value of the n-DMRS when the length of the m-DMRS field is 3 bits.

Therefore, if different UEs perform data transmission on a same uplink time and frequency resource by adopting a semi-persistent scheduling manner, a base station may set different values of the n-DMRS for the foregoing different UEs by using the value of the m-DMRS, so that reference signal sequences of the foregoing different UEs have different cyclic shift values of the reference signals, which ensures orthogonality of the reference signal sequences of the foregoing UEs.

**Table 1**

| m-DMRS | n-DMRS |
|--------|--------|
| 0 | 000 |
| 1 | 001 |

**Table 2**

| m-DMRS | n-DMRS |
|--------|--------|
| 00 | 000 |
| 01 | 001 |
| 10 | 010 |
| 11 | 011 |

**Table 3**

| m-DMRS | n-DMRS |
|--------|--------|
| 000 | 000 |
| 001 | 001 |
| 010 | 010 |
| 011 | 011 |
| 100 | 100 |
| 101 | 101 |
| 110 | 110 |
| 111 | 111 |

The base station determines, according to the value that is of the n-DMRS and is determined through the m-DMRS, and a mapping rule of a PHICH (Physical Hybrid indicator channel, physical hybrid indicator channel), an index of the PHICH channel for the UE. The UE performs, according to the value that is of the n-DMRS and is determined through the m-DMRS, ACK/NACK detection on the determined PHICH channel.

According to the foregoing method, in the semi-persistent scheduling manner, if uplink data transmission blocks of different UEs occupy a same start PRB index, or multiple uplink data transmission blocks of a same UE occupy a same start PRB index, and a PHICH channel corresponding to an uplink data transmission block of the foregoing UE is determined on a same downlink carrier, a collision of the PHICH channel corresponding to the uplink data transmission block of the foregoing UE may be avoided.

The setting a value of first information for the user equipment may include: where the first information is determined by a three-bit cyclic shift indicator field of a demodulation reference signal on a physical downlink control channel, setting the value of the first information for the user equipment by setting one or two bits in the cyclic shift indicator field of the demodulation reference signal to a fixed value. Specifically, when the data transmission is performed by adopting the semi-persistent scheduling manner, the n-DMRS field on the PDCCH may be used to indicate the value of the n-DMRS for different UEs. That is, the base station may not set a 3-bit n-DMRS field on the PDCCH to a fixed state. Therefore, if different UEs perform the data transmission on the same uplink time and frequency resource, the base station may set different n-DMRS states for the foregoing UEs on the PDCCH, so that the reference signal sequences of the foregoing UEs have different cyclic shift values of the reference signals, which ensures orthogonality of the reference signal sequences of the foregoing UEs.

For example, a state of a first bit of the 3-bit n-DMRS field may not be fixed, and states of a second bit and a third bit are set to 0 fixedly. An n-DMRS field after the foregoing setting may indicate two values. A value 000 is used by one UE, and a value 100 is used by another UE. The base station indicates a cyclic shift value of an uplink reference signal sequence for the UE according to the value of the n-DMRS, and determines, according to the PHICH mapping rule in LTE, an index of the PHICH channel corresponding to the uplink data transmission block of the foregoing UE. The UE performs, according to an n-DMRS state, the ACK/NACK detection on the PHICH channel which is determined for it by the base station.

In an embodiment, states of a first bit and a second bit of the 3-bit n-DMRS field may not be fixed, and a state of a third bit is set to 0 fixedly. An n-DMRS field after the foregoing setting may indicate four values.

The setting a value of first information for the user equipment may include: setting the value of the first information for the user equipment by setting a padding bit on a physical downlink control channel and a mapping between a value of the padding bit and the value of the first information.

For example, in the LTE system, a load of a PDCCH for scheduling uplink data transmission needs to be smaller than a load of a PDCCH for scheduling downlink data transmission. To reduce the number of times that the UE detects the PDCCH, it is stipulated in the LTE system that the load of the PDCCH for scheduling the uplink data transmission should be equal to the load of the PDCCH for scheduling the downlink data transmission. Therefore, some padding bits (padding bits) need to be added on the PDCCH which is for scheduling the uplink data transmission, so that the load of the PDCCH for scheduling the uplink data transmission is equal to the load of the PDCCH for scheduling the downlink data transmission.

For example, the padding bits (padding bits) added on the PDCCH which is for scheduling the uplink data transmission may be used to determine the value of the n-DMRS for different UEs.

For example, when a length of the padding bits is 1 bit, a mapping between a value of the padding bits and the value of the n-DMRS is as shown in Table 4. Table 4 is obtained after replacing the m-DMRS field in Table 1 with the padding bits.

**Table 4**

| padding bits | n-DMRS |
|--------------|--------|
| 0 | 000 |
| 1 | 001 |

Similarly, a mapping between the value of the padding bits and the value of the n-DMRS when the length of the padding bits is 2 or 3 bits may be obtained.

For example, the base station determines the index of the PHICH channel corresponding to the uplink data transmission block of the foregoing UE by using the value that is of the n-DMRS and is indicated by the padding bits and according to the PHICH mapping rule in the LTE; and the UE performs, according to the value of the n-DMRS field, the ACK/NACK detection on the PHICH which is determined for it by the base station.

The setting a value of first information for the user equipment may include:

in a single-user multi-codeword transmission mode, setting the value of the first information for the user equipment by setting a value of a field added on a physical downlink control channel in the single-user multi-codeword transmission mode relative to a physical downlink control channel in a single-user single-codeword transmission mode, and a mapping between the value of the added field and the value of the first information.

For example, in the LTE system, some new fields are added for a PDCCH for scheduling uplink single-user multi-codeword transmission relative to a PDCCH for scheduling single-codeword transmission, for example, a PMI (precoding matrix indicator) field, an n-DMRS field of codeword 2 or a differential field, and an RI (Rank indication) field. Therefore, if different UEs transmit data on the same time and frequency resource, a newly-added field on a PDCCH which is in a multi-codeword format and for semi-persistent scheduling, or part of bits in a newly-added field on a PDCCH which is in a multi-codeword format and for semi-persistent scheduling , or a combination of newly-added fields on a PDCCH which is in a multi-codeword format and for semi-persistent scheduling, or a redundancy state of a newly-added field on a PDCCH which is in a multi-codeword format and for semi-persistent scheduling may be used to indicate the value of the n-DMRS for the UE.

If the newly-added field (or the part of the bits in the newly-added field, or the combination of the newly-added fields, or the redundancy state of the newly-added field) is defined as a k-DMRS, for a mapping between a value of the k-DMRS and the value of the n-DMRS, reference may be made to a process of establishing the mapping between the value of the padding bits and the value of the n-DMRS field.

For example, the base station, according to the newly-added field on the PDCCH which is in the multi-codeword format, or the part of the bits in the newly-added field on the PDCCH which is in the multi-codeword format, or the combination of the newly-added fields on the PDCCH which is in the multi-codeword format, or the redundancy state of the newly-added field on the PDCCH which is in the multi-codeword format, indicates the value of the n-DMRS, determines the cyclic shift value of the uplink reference signal sequence for the UE, and determines, according to the PHICH mapping rule in the LTE, the index of the PHICH channel corresponding to the uplink data transmission block for the foregoing UE. According to the n-DMRS state, the UE performs the ACK/NACK detection on the PHICH that is determined for it by the base station.

The setting a value of first information for the user equipment may include: in a scenario of carrier aggregation, setting the value of the first information for the user equipment by setting a value of a carrier indicator field on a physical downlink control channel, and a mapping between the value of the carrier indicator field and the value of the first information. Specifically, in the LTE system, a carrier aggregation (carrier aggregation) technology is supported. In the LTE system, it is allowed that a PDCCH on a downlink carrier schedules a data resource on another downlink or uplink carrier by means of cross-carrier scheduling. Therefore, in a scenario of cross-carrier scheduling, a 3-bit carrier indicator field is added in a PDCCH structure. The carrier indicator field on the PDCCH is used to indicate an index of the downlink or uplink carrier that is scheduled.

For example, one or multiple bits in the CIF field on the PDCCH may be used to indicate the value of the n-DMRS for the UE. A mapping between one or multiple bits in the field and the value of the n-DMRS may be established. Specifically, reference may be made to Tables 1 and 2.

Alternatively, in a scenario of carrier aggregation, a redundancy value in different values which can be indicated by a carrier indicator field in the carrier indicator field on a physical downlink control channel, compared with values used for indicating different carriers in the carrier indicator field, is obtained; and the value of the first information is set for the user equipment by setting a mapping between the redundancy value and the value of the first information. Specifically, different values of the n-DMRS may be set for different UEs by using the redundancy state in the CIF field. For example, if a range of an index of an uplink carrier, where the uplink carrier may be scheduled by means of cross-carrier scheduling by a PDCCH which is for uplink semi-persistent scheduling and is of the UE, is A, B bits in the CIF field may be used to set the value of the n-DMRS for the UE, where:

$$B = 3 - \mathrm{ceil}\,(\log 2(A));$$

and

Ceil is a roundup function.

Table 1, 2, or 3 shows a mapping between a value of the B bits and the value of the n-DMRS. That is, the m-DMRS field in Table 1, 2, or 3 is replaced with a B-bit field. Alternatively, the value of the n-DMRS field on the PDCCH may not be set to a fixed value. The value of the n-DMRS is set for the UE by using the value of the n-DMRS field, and one or multiple bits in the CIF field on the PDCCH are set to fixed states to reduce a false alarm detection probability of the PDCCH.

Step 203: Obtain the reference signal sequence of the user equipment, perform channel estimation according to the reference signal sequence of the user equipment, and perform demodulation on data information of the user equipment according to a channel coefficient obtained by performing the channel estimation.

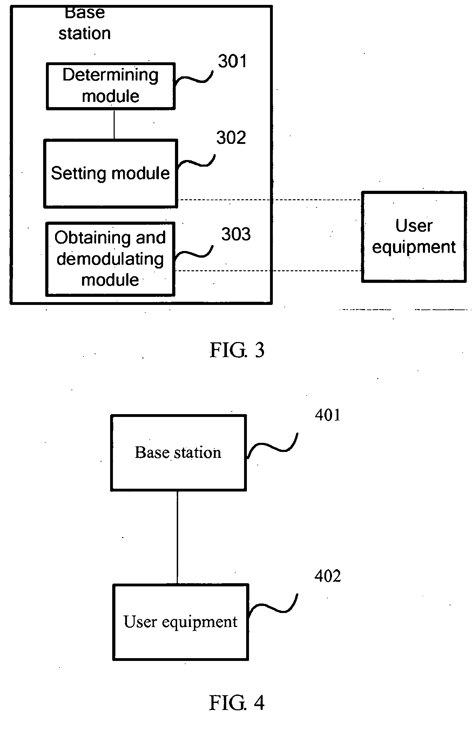

With reference to FIG. 3, a base station according to an embodiment of the present invention is described. As shown in FIG. 3, the base station includes: a determining module 301, a setting module 302, and an obtaining and demodulating module 303.

The determining module 301 is configured to determine to perform semi-persistent scheduling on data of a user equipment.

The setting module 302 is configured to set a value of first information for the user equipment, so that the user equipment determines a cyclic shift value of a reference signal sequence of the user equipment according to the value of the first information.

The obtaining and demodulating module 303 is configured to obtain the reference signal sequence of the user equipment, perform channel estimation according to the reference signal sequence of the user equipment, and perform demodulation on data information of the user equipment according to a channel coefficient obtained by performing the channel estimation.

The setting module 302 includes a first setting unit, a second setting unit, a third setting unit, a fourth setting unit, or a fifth setting unit.

The first setting unit is configured to send radio resource control signaling to the user equipment, where the radio resource control signaling includes second information; and set the value of the first information for the user equipment according to a mapping between a value set for the second information and the value of the first information.

The second setting unit is configured to: if the first information is determined by a three-bit cyclic shift indicator field of a demodulation reference signal on a physical downlink control channel, set the value of the first information for the user equipment by setting one or two bits in the cyclic shift indicator field of the demodulation reference signal to a fixed value.

The third setting unit is configured to set the value of the first information for the user equipment by setting a padding bit on a physical downlink control channel and a mapping between a value of the padding bit and the value of the first information.

The fourth setting unit is configured to set, in a single-user multi-codeword transmission mode, the value of the first information for the user equipment by setting a value of a field added on a physical downlink control channel in the single-user multi-codeword transmission mode relative to a physical downlink control channel in a single-user single-codeword transmission mode, and a mapping between the value of the added field and the value of the first information.

The fifth setting unit is configured to: in a scenario of carrier aggregation, set the value of the first information for the user equipment by setting a value of a carrier indicator field on a physical downlink control channel, and a mapping between the value of the carrier indicator field and the value of the first information; or in a scenario of carrier aggregation, obtain a redundancy value of different values which can be indicated by a carrier indicator field in the carrier indicator field on a physical downlink control channel and are relative to values used for indicating different carriers in the carrier indicator field, and set the value of the first information for the user equipment by setting a mapping between the redundancy value and the value of the first information.

The base station further includes a second determining module.

The second determining module is configured to determine, according to the value of the first information and a mapping rule of a physical hybrid indicator channel, a channel index of a physical hybrid indicator channel corresponding to an uplink data transmission block of the user equipment for the user equipment.

With reference to FIG. 4, a communication system according to an embodiment of the present invention is described. As shown in FIG. 4, the communication system includes: a base station 401, and a user equipment 402 that is connected to the base station 401 in a communicative manner.

The base station 401 is configured to determine to perform semi-persistent scheduling on data of the user equipment 402;

set a value of first information for the user equipment 402, so that the user equipment 402 determines a cyclic shift value of a reference signal sequence of the user equipment 402 according to the value of the first information; and

obtain the reference signal sequence of the user equipment 402, perform channel estimation according to the reference signal sequence of the user equipment 402, and perform demodulation on data information of the user equipment 402 according to a channel coefficient obtained by performing the channel estimation.

Those skilled in the art should understand that modules of an apparatus according to the embodiments of the present invention are divided by functions, and that in practice, a specific structure may be a split or a combination of the foregoing function modules.

In the foregoing embodiments of the present invention, the wording "receive" may be construed as actively obtaining information from another unit or receiving information sent by another unit.

The foregoing sequence numbers of the embodiments of the present invention are only for ease of description, but do not indicate the preference of the embodiments.

Solutions disclosed in content of the claims also fall within the protection scope of the embodiments of the present invention.

Persons of ordinary skill in the art may understand that all or part of the processes of the foregoing methods according to the embodiments may be implemented by a program instructing relevant hardware. The program may be stored in a computer readable storage medium.

The foregoing descriptions are only exemplary embodiments of the present invention, but not intended to limit the protection scope of the present invention. Any modification, equivalent replacement, or improvement made without departing from the principle of the present invention shall fall within the protection scope of the present invention.

**Claims**

1.  A data transmission method, comprising:

    determining (101, 201), by a base station, to perform semi-persistent scheduling on data of a user equipment;
    setting (101, 202), by the base station, a value of first information for the user equipment, wherein the value of the first information is used for the user equipment to determine a cyclic shift value of a reference signal sequence of the user equipment, the value of the first information is a value of an n-DMRS field for indicating a specific value of $n_{\text{DMRS}}^{(2)}$, and for different UEs that perform the data transmission on the same time and frequency resource, uplink reference signal sequences of the UEs have different cyclic shift values; and
    obtaining (102, 203), by the base station, the reference signal sequence of the user equipment, performing channel estimation according to the reference signal sequence of the user equipment, and performing demodulation on data information of the user equipment according to a channel coefficient obtained by the channel estimation;

    **characterized in that** the setting, by the base station, the value of the first information for the user equipment comprises one of:

    in a single-user multi-codeword transmission mode, setting, by the base station, the value of the first information for the user equipment according to a mapping between a value of a field and the value of the first information by setting a value of the field, wherein the field is an added field on a physical downlink control channel in the single-user multi-codeword transmission mode compared with a physical downlink control channel in a single-user single-codeword transmission mode;
    in a scenario of carrier aggregation, setting, by the base station, the value of the first information for the user equipment according to a mapping between a value of a carrier indicator field and the value of the first information by setting the value of the carrier indicator field on a physical downlink control channel; and
    in a scenario of carrier aggregation, obtaining, by the base station, a redundancy value of different values which is able to be indicated by a carrier indicator field in the carrier indicator field on a physical downlink control channel compared with values used for indicating different carriers in the carrier indicator field, and setting, by the base station, the value of the first information for the user equipment by setting a mapping between the redundancy value and the value of the first information.

2.  The method according to claim 1, wherein the added field on the physical downlink control channel in the single-user multi-codeword transmission mode compared with the physical downlink control channel in the single-user single-codeword transmission mode comprises:

    part of bits in the field added on the physical downlink control channel in the single-user multi-codeword transmission mode compared with the physical downlink control channel in the single-user single-codeword transmission mode; or
    a combination of fields added on the physical downlink control channel in the single-user multi-codeword transmission mode compared with the physical downlink control channel in the single-user single-codeword transmission mode; or
    a redundancy state of the field added on the physical downlink control channel in the single-user multi-codeword transmission mode compared with the physical downlink control channel in the single-user single-codeword transmission mode.

3.  The method according to claim 1, wherein after the user equipment determines the cyclic shift value of the reference signal sequence of the user equipment, the method further comprises:

    determining, by the base station, according to the value of the first information and a mapping rule of a physical hybrid indicator channel, a channel index of the physical hybrid indicator channel corresponding to an uplink data transmission block of the user equipment for the user equipment.

4.  The method according to claim 3, further comprising:

determining, by the user equipment ,the channel index of the physical hybrid indicator channel corresponding to the uplink data transmission block of the user equipment according to the value of the first information and the mapping rule of the physical hybrid indicator channel; and
detecting, by the user equipment, on the physical hybrid indicator channel, whether data sent by the user equipment to the base station is correctly received by the base station.

5. A base station, comprising:

a determining module (301), configured to determine to perform semi-persistent scheduling on data of a user equipment;
a setting module (302), configured to set a value of first information for the user equipment, wherein the value of the first information is used for the user equipment to determine a cyclic shift value of a reference signal sequence of the user equipment, the value of the first information is a value of an n-DMRS field for indicating a specific value of $n_{\text{DMRS}}^{(2)}$, and for different UEs that perform the data transmission on the same time and frequency resource, uplink reference signal sequences of the UEs have different cyclic shift values; and
an obtaining and demodulating module (303), configured to obtain the reference signal sequence of the user equipment, perform channel estimation according to the reference signal sequence of the user equipment, and perform demodulation on data information of the user equipment according to a channel coefficient obtained by the channel estimation,

**characterized in that** the setting module (302) comprises

a fourth setting unit, configured to set, in a single-user multi-codeword transmission mode, the value of the first information for the user equipment according to a mapping between a value of a field and the value of the first information by setting a value of the field, wherein the field is an added field on a physical downlink control channel in the single-user multi-codeword transmission mode compared with a physical downlink control channel in a single-user single-codeword transmission mode; or
a fifth setting unit, configured to: in a scenario of carrier aggregation, set the value of the first information for the user equipment according to a mapping between a value of a carrier indicator field and the value of the first information by setting the value of the carrier indicator field on a physical downlink control channel; or
in a scenario of carrier aggregation, obtain a redundancy value of different values which is able to be indicated by a carrier indicator field in the carrier indicator field on a physical downlink control channel compared with values used for indicating different carriers in the carrier indicator field, and set the value of the first information for the user equipment by setting a mapping between the redundancy value and the value of the first information.

6. The base station according to claim 5, further comprising: a second determining module, wherein:

the second determining module is configured to determine, according to the value of the first information and a mapping rule of a physical hybrid indicator channel, a channel index of the physical hybrid indicator channel corresponding to an uplink data transmission block of the user equipment for the user equipment.

7. A communication system, **characterized by**, comprising a base station (401) according to any one of the claims 5-6, and a user equipment (402).

**Patentansprüche**

1. Datenübertragungsverfahren, das Folgendes umfasst:

Bestimmen (101, 201) durch eine Basisstation, eine semi-persistente Planung an Daten eines Anwendergeräts auszuführen;
Einstellen (101, 202) durch die Basisstation eines Wertes von ersten Informationen für das Anwendergerät, wobei der Wert der ersten Informationen für das Anwendergeräts verwendet wird, um einen zyklischen Verschiebungswert einer Referenzsignalfolge des Anwendergeräts zu bestimmen, wobei der Wert der ersten Informationen ein Wert eines n-DMRS-Feldes zum Angeben eines bestimmten Wertes von $n_{DMRS}^{(2)}$ ist, und für verschiedene UEs, die die Datenübertragung zur selben Zeit und auf denselben Frequenzbetriebsmitteln ausführen, wobei Aufwärtsstreekenreferenzsignalfolgen der UEs verschiedene zyklische Verschiebungswerte besitzen; und
Erhalten (102, 203) durch die Basisstation der Referenzsignalfolge des Anwendergeräts, Ausführen einer Kanalschätzung gemäß der Referenzsignalfolge des Anwendergeräts und Ausführen einer Demodulation an den Dateninformationen des Anwendergeräts gemäß eines Kanalkoeffizienten, der durch die Kanalschätzung erhalten wurde;

**dadurch gekennzeichnet, dass** das Einstellen durch die Basisstation des Wertes der ersten Informationen für das Anwendergerät eines von Folgendem umfasst:

in einer Einzelanwender-Multicodewort-Übertragungsbetriebsart Einstellen durch die Basisstation des Wertes der ersten Informationen für das Anwendergerät gemäß einer Abbildung zwischen einem Wert eines Feldes und dem Wert der ersten Informationen durch Einstellen eines Wertes des Feldes, wobei das Feld ein auf einem physikalischen Abwärtsstreckensteuerkanal in der Einzelanwender-Multicodewort-Obertragungsbetriebsart im Vergleich zu einem physikalischen Abwärtsstreckensteuerkanal in einer Einzelanwender-Einzelcodewort-Übertragungsbetriebsart hinzugefügtes Feld ist;
in einem Szenarium einer Trägeransammlung Einstellen durch die Basisstation des Wertes der ersten Informationen für das Anwendergerät gemäß einer Abbildung zwischen einem Wert eines Trägerindikatorfeldes und dem Wert der ersten Informationen durch Einstellen des Wertes des Trägerindikatorfeldes auf einem physikalischen Abwärtsstreckensteuerkanal; und
in einem Szenarium einer Trägeransammlung Erhalten durch die Basisstation eines Redundanzwertes von verschiedenen Werten, der durch ein Trägerindikatorfeld in dem Trägerindikatorfeld auf einem physikalischen Abwärtsstreckensteuerkanal angegeben werden kann, im Vergleich zu Werten, die für das Angeben von verschiedenen Trägern in dem Trägerindikatorfeld verwendet werden, und Einstellen durch die Basisstation des Wertes der ersten Informationen für das Anwendergerät durch Einstellen einer Abbildung zwischen dem Redundanzwert und dem Wert der ersten Informationen.

2. Verfahren nach Anspruch 1, wobei das auf dem physikalischen Abwärtsstreckensteuerkanal in der Einzelanwender-Multicodewort-Übertragungsbetriebsart im Vergleich zu dem physikalischen Abwärtsstreckensteuerkanal in der Einzelanwender-Einzelcodewortbetriebsart hinzugefügte Feld Folgendes umfasst:

Teile von Bits in dem Feld, das auf dem physikalischen Abwärtsstreckensteuerkanal in der Einzelanwender-Multicodewort-Betriebsart im Vergleich zu dem physikalischen Abwärtsstreckensteuerkanal in der Einzelanwender-Einzelcodewortübertragungsbetriebsart hinzugefügt wurde; oder
eine Kombination von Feldern, die auf dem physikalischen Abwärtsstreckensteuerkanal in der Einzelanwender-Multicodewort-Übertragungsbetriebsart im Vergleich zu dem physikalischen Abwärtsstreckensteuerkanal in der Einzelanwender-Einzelcodewort-Übertragungsbetriebsart hinzugefügt wurden; oder
einen Redundanzzustand des Feldes, das auf dem physikalischen Abwärtsstreckensteuerkanal in der Einzelanwender-Multicodework-Übertragungsbetriebsart im Vergleich zu dem physikalischen A.bwärtsstreckensteuerkanal in der Einzelanwender-Einzelcodewort-Übertragungsbetriebsart hinzugefügt wurde.

3. Verfahren nach Anspruch 1, wobei, nachdem das Anwendergerät den zyklischen Verschiebungswert der Referenzsignalfolge des Anwendergeräts bestimmt, das Verfahren ferner Folgendes umfasst:

Bestimmen durch die Basisstation gemäß dem Wert der ersten Informationen und einer Abbildungsregel eines physikalischen Hybridindikatorkanals eines Kanalindex des physikalischen Hybridindikatorkanals, der einem Aufwärtsstreekendatenübertragungsblock des Anwendergeräts für das Anwendergerät entspricht.

4. Verfahren nach Anspruch 3, das ferner umfasst:

Bestimmen durch das Anwendergerät des Kanalindexes des physikalischen Hybridindikatorkanals, der einem Aufwärtsstreckendatenübertragungsblock des Anwendergeräts entspricht, gemäß dem Wert der ersten Informationen der Abbildungsregel des physikalischen Hybridindikatorkanals; und
Detektieren durch das Anwendergerät auf dem physikalischen Hybridindikatorkanal, ob Daten, die durch das Anwendergerät an die Basisstation gesendet wurden, durch die Basisstation korrekt empfangen werden.

5. Basisstation, die Folgendes umfasst:

ein Bestimmungsmodul (301), das konfiguriert ist, eine semi-persistente Planung von Daten eines Anwendergeräts zu bestimmen;
ein Einstellmodul (302), das konfiguriert ist, einen Wert von ersten Informationen für das Anwendergerät, wobei der Wert der ersten Informationen für das Anwendergerät verwendet wird, um einen zyklischen Verschiebungswert einer Referenzsignalfolge des Anwendergerät zu bestimmen, wobei der Wert der ersten Informationen ein Wert eines n-DMRS-Feldes zum Anzeigen eines bestimmten Wertes von $n^{(2)}_{DMRS}$ ist, und für verschiedene UEs, die die Datenübertragung zur selben Zeit und auf denselben Frequenzbetriebsmitteln ausführen, einzustellen, wobei Aufwärtsstreckenreferenzsignalfolgen der UEs verschiedene zyklische Verschiebungswerte haben; und

ein Erfassungs- und Demodulationsmodul (303), das konfiguriert ist, die Referenzsignalfolge des Anwendergeräts zu erhalten, eine KanalSchätzung gemäß der Referenzsignalfolge des Anwendergeräts auszuführen und eine Demodulation an den Dateninformationen des Anwendergeräts gemäß einem Kanalkoeffizienten auszuführen, der durch die Kanalschätzung erhalten wurde,

**dadurch gekennzeichnet, dass** das Einstellmodul (302) Folgendes umfasst:

eine vierte Einstelleinheit, die konfiguriert ist, in einer Einzelanwender-Multicodewort-Übertragungsbetriebsart den Wert der ersten Informationen für das Anwendergerät gemäß einer Abbildung zwischen einem Wert eines Feldes und dem Wert der ersten Informationen durch Einstellen eines Wertes des Feldes einzustellen, wobei das Feld ein auf einem physikalischen Abwärtsstreckensteuerkanal in der Einzelanwender-Multicodewort-Übertragungsbetriebsart im Vergleich zu einem physikalischen Abwärtsstreckensteuerkanal in einer Einzelanwender-Einzelcodewort-Übertragungsbetriebsart hinzugefügtes Feld ist; oder
eine fünfte Einstelleinheit, die konfiguriert ist: in einem Szenarium einer Trägeransammlung den Wert der ersten Informationen für das Anwendergerät gemäß einer Abbildung zwischen einem Wert eines Trägerindikatorfeldes und dem Wert der ersten Informationen durch Einstellen des Wertes des Trägerindikatorfeldes auf einem physikalischen Abwärtsstreckensteuerkanal einzustellen; oder
in einem Szenarium einer Trägeransammlung eine Redundanzwert von verschiedenen Werten, der durch ein Trägerindikatorfeld in dem Trägerindikatorfeld auf einem physikalischen Abwärtsstreckensteuerkanal angegeben werden kann, im Vergleich zu Werten, die für das Angeben von verschiedenen Trägern in dem Trägerindikatorfeld verwendet werden, zu erhalten und den Wert der ersten Informationen für das Anwendergerät durch Einstellen einer Abbildung zwischen dem Redundanzwert und dem Wert der ersten Informationen einzustellen.

6. Basisstation nach Anspruch 5, die ferner Folgendes umfasst: ein zweites Bestimmungsmodul, wobei:

das zweite Bestimmungsmodul konfiguriert ist, gemäß dem Wert der ersten Informationen und einer Abbildungsregel eines physikalischen Hybridindikatorkanals einen Kanalindex des physikalischen Hybridindikatorkanals entsprechend einem Aufwärtsstreckendatenübertragungsblock des Anwendergeräts für das Anwendergerät zu bestimmen.

7. Kommunikationssystem, dadurch gekennzeichet, dass es eine Basisstation (401) nach einem der Ansprüche 5-6 und ein Anwendergerät (402) umfasst.

**Revendications**

1. Procédé de transmission de données, comprenant :

la détermination (101, 201), par une station de base, de l'exécution d'une programmation semi persistante sur les données d'un équipement utilisateur,
l'établissement (101, 202), par la station de base, d'une valeur pour une première information destinée à l'équipement utilisateur, la valeur de la première information étant utilisée pour que l'équipement utilisateur détermine une valeur de décalage cyclique appartenant à une séquence de signaux de référence de l'équipement utilisateur, la valeur de la première information étant une valeur d'un champ indicateur de type n-DMRS destiné à montrer une valeur spécifique de $n^{(2)}_{DMRS}$ et,
pour différents équipements utilisateur UE qui effectuent la transmission de données sur la même ressource de temps et de fréquence, les séquences de signaux de référence de liaison montante des équipements utilisateur UE présentent des valeurs différentes de décalages cycliques, et
la récupération (102, 203), par la station de base, de la séquence de signaux de référence de l'équipement utilisateur, et l'exécution d'une estimation de canal en fonction de la séquence de signaux de référence de l'équipement utilisateur et
l'exécution d'une démodulation sur l'information de données de l'équipement utilisateur en fonction d'un coefficient de canal obtenu par l'estimation de canal,

**caractérisé en ce que** l'établissement, par la station de base, de la valeur de la première information pour l'équipement utilisateur comprend l'un parmi :

l'établissement, par la station de base, dans un mode de transmission à utilisateur unique et mot de code multiple, de la valeur de la première information pour l'équipement utilisateur en fonction d'un mappage réalisé entre une valeur de champ et la valeur de la première information en fixant une valeur du champ, le champ étant un champ ajouté sur un canal physique de commande de liaison descendante dans le mode de transmission à utilisateur unique et mot de code multiple par comparaison à un canal physique de commande de liaison descendante dans un mode de transmission à utilisateur unique et mot de code unique,

l'établissement, par la station de base, dans un scénario d'agrégation de porteuses, de la valeur de la première information pour l'équipement utilisateur en fonction d'un mappage réalisé entre une valeur de champ indicateur de porteuse et la valeur de la première information en fixant la valeur du champ indicateur de porteuse sur un canal physique de commande de liaison descendante, et

la récupération, par la station de base, dans un scénario d'agrégation de porteuse, d'une valeur de redondance pour différentes valeurs, laquelle peut être indiquée par un champ indicateur de porteuse dans le champ indicateur de porteuse sur un canal physique de commande de liaison descendante par comparaison à des valeurs utilisées pour indiquer des porteuses différentes dans le champ indicateur de porteuse, et la fixation, par la station de base, de la valeur de la première information pour l'équipement utilisateur en établissant un mappage entre la valeur de redondance et la valeur de la première information.

**2.** Procédé selon la revendication 1, dans lequel le champ ajouté sur le canal physique de commande de liaison descendante dans le mode de transmission à utilisateur unique et mot de code multiple, par comparaison avec le canal physique de commande de liaison descendante dans le mode de transmission à utilisateur unique et mot de code unique, comprend :

une partie des bits dans le champ ajouté sur le canal physique de commande de liaison descendante dans le mode de transmission à utilisateur unique et mot de code multiple par comparaison avec le canal physique de commande de liaison descendante dans le mode de transmission à utilisateur unique et mot de code unique, ou

une combinaison de champs ajoutée sur le canal physique de commande de liaison descendante dans le mode de transmission à utilisateur unique et mot de code multiple par comparaison avec le canal physique de commande de liaison descendante dans le mode de transmission à utilisateur unique et mot de code unique, ou

un état de redondance du champ ajouté sur le canal physique de commande de liaison descendante dans le mode de transmission à utilisateur unique et mot de code multiple par comparaison avec le canal physique de commande de liaison descendante dans le mode de transmission à utilisateur unique et mot de code unique.

**3.** Procédé selon la revendication 1, dans lequel le procédé comprend en outre, après que l'équipement utilisateur a déterminé la valeur de décalage cyclique de la séquence de signaux de référence de l'équipement utilisateur :

la détermination, par la station de base, en fonction de la valeur de la première information et d'une règle de mappage d'un canal indicateur hybride physique, de l'indice du canal appartenant au canal indicateur hybride physique correspondant à un bloc de transmission de données de liaison montante de l'équipement utilisateur pour l'équipement utilisateur.

**4.** Procédé selon la revendication 3, comprenant en outre :

la détermination, par l'équipement utilisateur, de l'indice du canal appartenant au canal indicateur hybride physique correspondant au bloc de transmission de données de liaison montante de l'équipement utilisateur en fonction de la valeur de la première information et de la règle de mappage du canal indicateur hybride physique, et

la détection, par l'équipement utilisateur, sur le canal indicateur hybride physique, de ce que des données envoyées par l'équipement utilisateur vers la station de base sont reçues correctement par la station de base.

**5.** Station de base comprenant :

un module de détermination (301) configuré pour déterminer l'exécution d'une programmation semi persistante sur des données d'un équipement utilisateur,

un module d'établissement (302) configuré pour établir une valeur pour une première information destinée à l'équipement utilisateur, la valeur de la première information étant utilisée pour que l'équipement utilisateur détermine une valeur de décalage cyclique appartenant à une séquence de signaux de référence de l'équipement utilisateur, la valeur de la première information étant une valeur d'un champ indicateur de type n-DMRS destiné à montrer une valeur spécifique de $n^{(2)}_{DMRS}$ et, pour différents équipements utilisateurs UE qui effectuent la transmission de données sur la même ressource de temps et de fréquence, les séquences de signaux de référence de liaison montante des équipements utilisateurs UE présentent des valeurs différentes de décalages cycliques, et

un module de récupération et de démodulation (303) configuré pour récupérer la séquence de signaux de référence de l'équipement utilisateur, pour exécuter une estimation de canal en fonction de la séquence de signaux de référence de l'équipement utilisateur, et pour exécuter une démodulation sur l'information de données de l'équipement utilisateur en fonction d'un coefficient de canal obtenu par l'estimation de canal,

**caractérisée en ce que** le module d'établissement (302) comprend :

une quatrième unité d'établissement, configurée pour fixer, dans un mode de transmission à utilisateur unique et mot de code multiple, la valeur de la première information pour l'équipement utilisateur en fonction d'un mappage réalisé entre une valeur de champ et la valeur de la première information en fixant une valeur du champ, le champ étant un champ ajouté sur un canal physique de commande de liaison descendante dans le mode de transmission à utilisateur unique et mot de code multiple par comparaison à un canal physique de commande de liaison descendante dans un mode de transmission à utilisateur unique et mot de code unique, ou

une cinquième unité d'établissement, configurée pour fixer, dans un scénario d'agrégation de porteuses, la valeur de la première information pour l'équipement utilisateur en fonction d'un mappage réalisé entre une valeur de champ indicateur de porteuse et la valeur de la première information en fixant la valeur du champ indicateur de porteuse sur un canal physique de commande de liaison descendante, ou pour récupérer dans un scénario d'agrégation de porteuses une valeur de redondance pour différentes valeurs, laquelle peut être indiquée par un champ indicateur de porteuse dans le champ indicateur de porteuse sur un canal physique de commande de liaison descendante par comparaison à des valeurs utilisées pour indiquer des porteuses différentes dans le champ indicateur de porteuse, et pour fixer la valeur de la première information pour l'équipement utilisateur en établissant un mappage entre la valeur de redondance et la valeur de la première information.

**6.** Station de base selon la revendication 5, comprenant en outre un second module de détermination, dans laquelle :

le second module de détermination est configuré pour déterminer, en fonction de la valeur de la première information et d'une règle de mappage d'un canal indicateur hybride physique, un indice de canal appartenant au canal indicateur hybride physique correspondant à un bloc de transmission de données de liaison montante de l'équipement utilisateur pour l'équipement utilisateur.

**7.** Système de communication **caractérisée en ce qu'**il comprend une station de base (401) conforme à l'une quelconque des revendications 5 et 6, et un équipement utilisateur (402).

Determine to perform semi-persistent scheduling on data of a user equipment, and set a value of first information for the user equipment, so that the user equipment determines a cyclic shift value of a reference signal sequence of the user equipment according to the value of the first information

~ 101

Obtain the reference signal sequence of the user equipment, perform channel estimation according to the reference signal sequence of the user equipment, and perform demodulation on data information of the user equipment according to a channel coefficient obtained by performing the channel estimation

~ 102

FIG. 1

Determine to perform semi-persistent scheduling on data of a user equipment ~ 201

Set a value of first information for the user equipment, so that the user equipment determines a cyclic shift value of a reference signal sequence of the user equipment according to the value of the first information ~ 202

Obtain the reference signal sequence of the user equipment, perform channel estimation according to the reference signal sequence of the user equipment, and perform demodulation on data information of the user equipment according to a channel coefficient obtained by performing the channel estimation ~ 203

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009268685 A1

**Non-patent literature cited in the description**

- 3rd Generation Partnership Project; Technical Specification Group Radio Access Network; Evolved Universal Terrestrial Radio Access (E-UTRA); Physical Channels and Modulation (Release 9). 3GPP STANDARD; 3GPP TS 36.211, 3RD GENERATION PARTNERSHIP PROJECT (3GPP). MOBILE COMPETENCE CENTRE, 10 December 2009
- 3 rd Generation Partnership Project; Technical Specification Group Radio Access Network; Evolved Universal Terrestrial Radio Access (E-UTRA); Physical layer procedures (Release 9). 3GPP STANDARD; 3GPP TS 36.213, 3RD GENERATION PARTNERSHIP PROJECT (3GPP). MOBILE COMPETENCE CENTRE, 17 December 2009
- 3rd Generation Partnership Project; Technical Specification Group Radio Access Network; Evolved Universal Terrestrial Radio Access (E-UTRA) Radio Resource Control (RRC); Protocol specification (Release 9). 3GPP STANDARD; 3GPP TS 36.331, 3RD GENERATION PARTNERSHIP PROJECT (3GPP). MOBILE COMPETENCE CENTRE, 07 January 2010
- OCC and CS for UL RS in SU/MU-MIMO. 3GPP DRAFT; R1-100378, 3RD GENERATION PARTNERSHIP PROJECT (3GPP). MOBILE COMPETENCE CENTRE, 12 January 2010
- Uplink DM-RS Resource Assignment for LTE-Advanced. 3GPP DRAFT; R1-101223 UL DMRS, 3RD GENERATION PARTNERSHIP PROJECT (3GPP). MOBILE COMPETENCE CENTRE, 16 February 2010
- Considerations on Uplink DM-RS sequence in LTE-Advanced. 3GPP DRAFT; R1-100668, 3RD GENERATION PARTNERSHIP PROJECT (3GPP). MOBILE COMPETENCE CENTRE, 13 January 2010

- DM-RS in Support of UL Spatial Multiplexing. 3GPP DRAFT; R1-100691 DMRS FOR UL MIMO, 3RD GENERATION PARTNERSHIP PROJECT (3GPP). MOBILE COMPETENCE CENTRE, 12 January 2010
- Consideration on DM-RS design for UL MIMO in LTE-A. 3GPP DRAFT; R1-101246 LG UL DM-RS, 3RD GENERATION PARTNERSHIP PROJECT (3GPP). MOBILE COMPETENCE CENTRE, 17 February 2010
- **CONSIDERATIONS ON PHICH MAPPING IN LTE-A.** 3GPP DRAFT; R1-101046 CONSIDERATIONS ON PHICH MAPPING IN LTE-A, 3RD GENERATION PARTNERSHIP PROJECT (3GPP). MOBILE COMPETENCE CENTRE, 16 February 2010
- CM reduction for UL RS on multiple component carriers. 3GPP DRAFT; R1-101268, 3RD GENERATION PARTNERSHIP PROJECT (3GPP). MOBILE COMPETENCE CENTRE, 16 February 2010
- CM issues for UL carrier aggregation. 3GPP DRAFT; R1-093839 CM ISSUES FOR UL CARRIER AGGREGATION, 3RD GENERATION PARTNERSHIP PROJECT (3GPP). MOBILE COMPETENCE CENTRE, 12 October 2009
- PHICH carrier linkage for carrier aggregation. 3GPP DRAFT; R1-09386-1-PHICH, 3RD GENERATION PARTNERSHIP PROJECT (3GPP). MOBILE COMPETENCE CENTRE, 12 October 2009
- Research on the density of demodulation reference signals for dual-layer beamforming in LTE system. **YINHUI LIU.** COMMUNICATIONS TECHNOLOGY AND APPLICATIONS. IEEE, 16 October 2009, 322-325